# FASCICULE DE BREVET EUROPEEN

(11) **EP 1 922 271 B1**
(45) Date de publication et mention de la délivrance du brevet: **19.11.2014**
(21) Numéro de dépôt: 06792945.5
(22) Date de dépôt: 22.08.2006
(51) Int. Cl.: B65G 17/20, B29C 49/42, B29C 49/68, B29C 35/08

(54) **CHAINE DE TRANSFERT POUR DISPOSITIF DE CHAUFFAGE DE PREFORMES DESTINE A UNE MACHINE DE SOUFFLAGE DE CONTENEURS**
TRANSFERSTRASSE FÜR EINE VORFORMLINGERWÄRMUNGSVORRICHTUNG, DIE FÜR EINE BEHÄLTERBLASFORMMASCHINE AUSGELEGT IST
TRANSFER LINE FOR A PREFORM HEATING DEVICE DESIGNED FOR A CONTAINER BLOWING MACHINE

(30) Priorité: 29.08.2005 FR 0552591
(43) Date de publication de la demande: 21.05.2008
(73) Titulaire: Sidel Participations, 76930 Octeville Sur Mer (FR)
(72) Inventeur: GILLET, Denis, F-76930 Octeville Sur Mer (FR)
(74) Mandataire: Gevers France
(86) Numéro de dépôt international: PCT/EP2006/065558
(87) Numéro de publication internationale: WO 2007/025911

(56) Documents cités:
- EP-A- 0 920 974
- AU-B2- 742 520
- US-A- 4 432 720
- US-A- 6 109 907

## Description

La présente invention concerne une chaîne de transfert pour dispositif de chauffage de préformes. Un tel dispositif de chauffage est destiné à une machine de soufflage de conteneurs, chaque conteneur étant formé à partir d'une préforme.

Dans l'état de la technique, on a déjà décrit une machine de soufflage de conteneurs qui reçoit en entrée une succession de préformes en matériau thermoplastique et qui produit en sortie des conteneurs dérivés des préformes. Une telle machine de soufflage comporte principalement un dispositif de chauffage des préformes qui circulent à l'intérieur d'une succession d'enceintes de chauffage, puis un ensemble de moules à l'intérieur de chacun desquels au moins une préforme réchauffée, et donc amollie, est insérée. Puis, sur chaque moule, est associée un élément de soufflage qui déforme la préforme jusqu'à venir appliquer la matière de la préforme amollie sur les parois intérieures du moule de façon à former un conteneur d'une forme déterminée. C'est de cette manière que l'on produit, à des cadences extrêmement élevées, des bouteilles d'eau minérale par exemple.

On connaît de l'état de la technique, par exemple des documents FR-A-2.728.547, EP-A-0.573.352, WO-2005/068329, WO-2007/025909, une chaîne de transfert permettant de prendre, sur un dispositif de chargement de préformes à la température ambiante, une préforme de façon à la poser sur un moyen de support de préforme et à l'entraîner le long d'un chemin prédéterminé à l'intérieur du dispositif de chauffage.

Le dispositif de chauffage comporte une succession d'enceintes de chauffage à l'intérieur desquelles la température de la préforme est progressivement augmentée.

Cependant, afin d'appliquer un réchauffement homogène sur l'ensemble de la masse de matière de la préforme, il est connu que le moyen de support de préformes est animé d'un mouvement de rotation autour de l'axe de la préforme de sorte qu'au cours de la circulation de la préforme dans le dispositif de chauffage, l'ensemble des points de la préforme reçoit en moyenne la même quantité d'énergie thermique. C'est particulièrement le cas quand chaque enceinte de chauffage est équipée d'une rampe de chauffage comportant plusieurs lampes à infrarouge.

Dans l'état de la technique, par exemple dans le document FR-A-2.646.632, on a déjà décrit des dispositifs permettant de plus de retourner chaque préforme avant son entrée dans le dispositif de chauffage et/ou après sa sortie du dispositif de chauffage. En particulier, ces dispositifs de retournement de préformes permettent d'orienter correctement une partie de col et une partie de fond ou bien lors de la circulation dans le dispositif de chauffage ou bien lors de l'introduction de la préforme chauffée dans le moule qui a été décrit précédemment.

À cette fin, le moyen de support de préformes est associé à une chaîne de pièces articulées qui permet d'appliquer, en au moins un point de la circulation sur la chaîne de transfert associé au dispositif de chauffage, un mouvement de retournement de la préforme.

On connaît également de l'état de la technique, par exemple des documents EP-A-0.935.572 AU 742 520, EP 0920974, US 6514448, DE 10140447 ou US-4,432,720, des moyens permettant d'entraîner l'axe de la préforme en rotation lors de sa circulation à l'intérieur du dispositif de chauffage.

De tels moyens pour entraîner en rotation la préforme comportent une chaîne à maillons, telle qu'une chaîne de Galle, qui est montée fixe de sorte qu'une roue dentée solidaire d'un arbre coaxial avec l'axe de la préforme, monté sur des paliers solidaires du moyen de support de préformes vienne, lors des instants pendant lesquels la préforme doit tourner autour de son axe, s'engrener dans les maillons de la chaîne fixe.

Cependant, à cause de la traction qu'il faut appliquer à la chaîne pour la rendre fixe relativement à la circulation des diverses roues dentées associées à l'ensemble des moyens de support de préformes, il est nécessaire que les maillons de la chaîne présentent une dimension suffisante. Il en résulte que la roue dentée doit elle-même présenter une denture d'un pas suffisant.

Or, cette contrainte dimensionnelle va à l'encontre de la nécessité de rapprocher autant que possible les moyens de support de préformes successifs dans la chaîne de transfert, afin d'augmenter la cadence de production de conteneurs formés.

Pour résoudre ce problème, on a déjà proposé de disposer de deux chaînes à maillons parallèles l'une à l'autre et disposées à des hauteurs différentes, de sorte que un moyen de transfert donné soit engrené par sa roue dentée à la chaîne à maillons inférieure tandis que le moyen de transfert suivant est engrené par sa roue dentée à la chaîne à maillons supérieure.

La présente invention concerne un perfectionnement à cet état de la technique en ce qu'elle concerne une chaîne de transfert pour dispositif de chauffage de préformes du genre dans lequel un moyen de support de préformes est monté sur une chaîne articulée avec un moyen qui, pour entraîner en rotation la préforme lors de sa circulation dans le dispositif de chauffage, comporte un arbre solidaire d'un élément de la chaîne articulée et porte un pignon astreint à rouler sur un chemin de roulement solidaire d'un support lorsque ladite chaîne articulée est entraînée par un moyen moteur.

L'invention se caractérise notamment en ce qu'une platine, fixée au support réalisé sous la forme d'une plaque dirigée sensiblement verticalement, comporte respectivement l'association d'une partie supérieure formant un rail de roulement destiné à supporter la charge de moyens de translation des moyens successifs de support de préformes et d'une partie inférieure de fixation du chemin de roulement dudit pignon.

Selon un autre aspect de l'invention, le support est sous la forme d'une plaque dirigée sensiblement verticalement, reçoit une platine.

Selon un autre aspect de l'invention, la platine supporte un moyen de translation des moyens successifs de support de préformes.

Selon un autre aspect de l'invention, la partie supérieure de la platine sert de rail de roulement à une roue, pouvant présenter un profil auto centrant et montée sur un arbre solidaire d'un corps pour une chaîne articulée.

Selon un autre aspect de l'invention, le corps porte un arbre dont l'axe est confondu avec l'axe de symétrie d'une préforme saisie par une pince de préhension, l'arbre portant, fixé en rotation un pignon qui est destiné à venir s'entraîner sur un chemin de roulement montés sur le support.

Selon un autre aspect de l'invention, le chemin de roulement, présenté au pignon, est formé le long du trajet de circulation des préformes dans le dispositif de chauffage, sur une partie de la platine solidaire du support.

Selon un autre aspect de l'invention, le chemin de roulement est composé par une courroie crantée qui a été déroulée et fixée sur une partie plate de la partie inférieure de la platine en forme de rail.

Selon un autre aspect de l'invention, le pas de crantage de la courroie crantée est adapté au module de denture du pignon, et les valeurs de pas de crantage et de module de denture sont déterminées sur la base de la vitesse de défilement prévue sur la chaîne de transfert de manière à permettre une vitesse de rotation adaptée de chacune des préformes montées sur les moyens de support successifs comme le moyen de support, la vitesse de rotation étant calculée de manière à permettre un échauffement uniforme de la masse de la préforme.

Selon un autre aspect de l'invention, la rigidité du chemin de roulement est assurée par le vissage de sections sensiblement rectilignes de la courroie crantée sur la partie correspondante de la platine.

Selon un autre aspect de l'invention, le pignon est intercalé entre le corps de la chaîne articulée et le corps proprement dit du moyen de support de préformes.

Selon un autre aspect de l'invention, la courroie crantée présente une hauteur simplifiant le réglage relatif des moyens de support de préformes par rapport aux autres éléments fixes comme la chaîne articulée.

Selon un autre aspect de l'invention, l'association du chemin de roulement et de la partie de fixation du chemin de roulement sur une même platine est déterminée de manière à éliminer le réglage des hauteurs relatives des cames de support de la chaîne articulée relativement aux chaînes à maillons d'une part et relativement aux enceintes de chauffage du dispositif de chauffage d'autre part.

Selon un autre aspect de l'invention, la chaîne de transfert est disposée en plusieurs chemins traversant des éléments chauffants de sorte que chaque pignon des moyens pour entraîner la préforme en rotation soit engagé à son tour sur un chemin de roulement et un bâti associés aux dits éléments chauffants (A1, A2, B1, B2).

Enfin, l'invention concerne aussi une machine de soufflage de conteneurs sur la base de préformes réchauffées dans un dispositif de chauffage. Le dispositif de chauffage comporte une chaîne de transfert de préformes selon l'une quelconque des revendications précédentes.

D'autres avantages et caractéristiques de la présente invention seront mieux compris à l'aide de la description et des figures parmi lesquelles :
- la figure 1 est une vue partielle de face d'une chaîne de transfert selon l'état de la technique ;
- la figure 2 est une vue schématique d'un dispositif de chauffage intégrant une chaîne de transfert selon la figure 1 ;
- la figure 3 est un schéma de principe d'une chaîne de transfert selon la présente invention ;
- la figure 4 est un schéma de principe d'un autre mode de réalisation d'une chaîne de transfert et d'un dispositif de chauffage selon la présente invention.

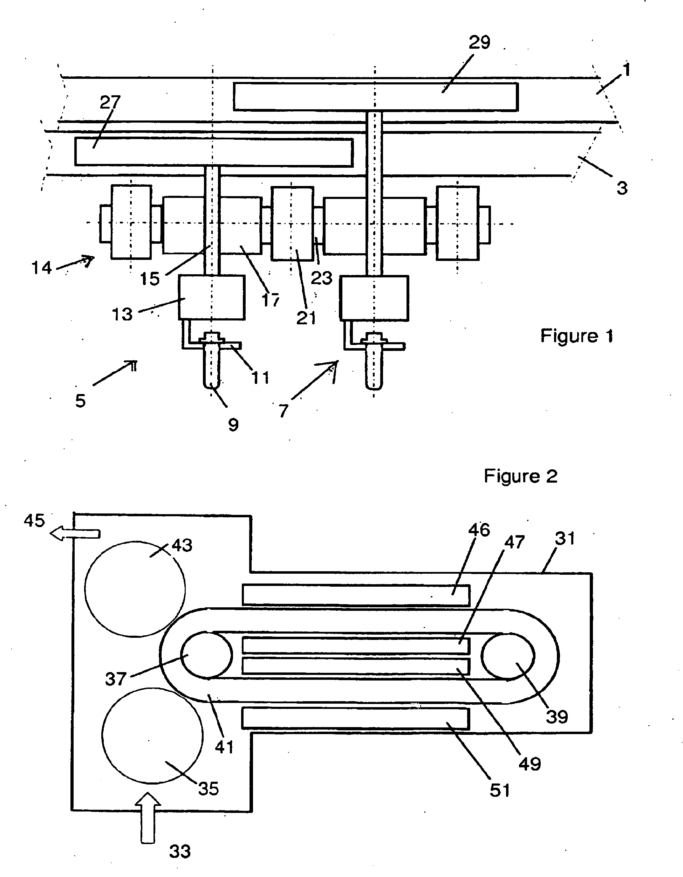

À la figure 1, on a représenté une vue de face d'une partie d'une chaîne de transfert selon l'état de la technique. On a représenté deux moyens de support de préformes successifs, respectivement 5, 7. Une préforme 9 a été référencée sur une pince 11 mobilisée et supportée par le corps 13 du moyen de support 5.

La préforme 9 présente à sa partie supérieure une partie de col qui, par exemple pour un conteneur doté d'une fermeture à bouchon à vis, comporte un filetage et un anneau de garde. La préforme 9 présente, à sa partie inférieure, une partie de fond qui ferme le tube de forme générale cylindrique, aligné sur l'axe central représenté à la figure.

Chaque moyen de support 5, 7 de préformes 9 est associé à un corps 17, articulé sur la chaîne articulée 14 de sorte que la position relative transversale de chaque moyen de support de préformes reste sensiblement constante et que, lorsque la chaîne articulée 14 se déplace parallèlement à sa propre dimension, le moyen de support 5, 7, ... de préformes est entraîné le long du chemin de circulation dans le dispositif de chauffage représenté.

On a représenté partiellement deux chaînes à maillons 1 et 3 sur chacune desquelles vient s'engrener une roue dentée 27 pour le moyen de support 5, une roue dentée 29 pour le moyen de support 7, ... le décalage vertical des deux chaînes à maillons 1 et 3 permet de recouvrir sensiblement l'espace occupé par chacun des moyens de support et donc de rapprocher le pas entre deux préformes successives lors de la circulation dans le dispositif de chauffage.

La roue dentée 27 est solidaire de l'extrémité d'un arbre 15 qui est supporté libre en rotation sur le corps 17 de la chaîne articulée 14 et dont l'autre extrémité permet de mettre en rotation le corps 13 du moyen de support 5 avec sa pince 11 de sorte que la préforme 9 puisse tourner autour de son axe de symétrie.

Particulièrement, la chaîne articulée 14 comporte aussi des corps intermédiaires comme le corps 21. Ces corps intermédiaires sont montés sur des arbres tournant d'axe horizontal à la figure 1 de sorte que lors de points particuliers, lors du trajet sur la chaîne de transfert, l'interposition de cames (non représentées) permettent de faire tourner le moyen de support de préformes autour de l'axe horizontal représenté le long de la chaîne articulée 14.

À la figure 2, on a représenté une vue de dessus d'un dispositif de chauffage avec la chaîne de transfert, ainsi qu'il est connu dans l'état de la technique. Les préformes à la température ambiante sont introduites par un chargeur 33 sur une première roue de chargement 35 de sorte que lorsque une pince 11 du moyen de support 5, 7 associé à une chaîne de transfert 41 passe devant une préforme 9 livrée par la roue 35, la préforme 9 est chargée sur le moyen de support, particulièrement sur une pince comme la pince 11, et la préforme 9 entre sur le trajet de circulation à l'intérieur du dispositif de chauffage 31.

Le dispositif de chauffage comporte des éléments de chauffage respectivement 46, 47, 49, 51 associés de part et d'autre d'un chemin "aller" et d'un chemin "retour" sur la chaîne de transfert qui tourne autour de roues 37 et 39.

Lorsque les préformes ont circulé à l'intérieur des enceintes limitées par les éléments de chauffage précités, chaque préforme réchauffée est saisie par un organe de préhension (non représenté) sur une roue 43 et transférée vers (flèche 45) un ensemble de moules de soufflage ainsi qu'il est connu dans l'état de la technique.

C'est pendant le trajet "aller", puis pendant le trajet "retour" que les préformes doivent être mises en rotation de façon à ce que les flux thermiques, qui sont sensiblement dirigés dans la direction verticale dans le dessin de la figure 2, traversent l'ensemble de la matière à réchauffer pour chaque préforme.

Les chaînes à maillons 1 et 3 représentées à la figure 1 sont alors présentées à l'aide de roues de mise en traction (non représentées) sur le chemin de chacune des paires de roues des moyens de support successifs des préformes, comme la roue 27 destinée à la chaîne à maillons inférieure 3 et la roue 29 destinée à la chaîne à maillons supérieure 1.

Il en résulte particulièrement que la hauteur des deux chaînes à maillons 1 et 3 doit être correctement réglée par rapport à l'ensemble des roues supérieure 29 et inférieure 27 des moyens de support 5, 7 de préformes. Cette contrainte entraîne des durées de réglage élevées entre deux campagnes de soufflage de conteneurs.

Il résulte aussi de la disposition des deux chaînes que la partie supérieure du dispositif de chauffage, comme le dispositif 31 de la figure 2, doit être surélevée pour permettre la disposition des deux chaînes l'une au-dessus de l'autre.

On remarque aussi que le diamètre des roues dentées 27 et 29 doit être adapté à des dentures de pas important de façon à ce que chaque dent puisse s'adapter aux maillons d'une chaîne lors du roulage des roues dentées le long du trajet des moyens de support de préformes dans le dispositif de chauffage 31. Il en résulte que les parties mobiles de la chaîne de transfert représentent une masse de matière plus élevée à cause de la taille importante des roues dentées.

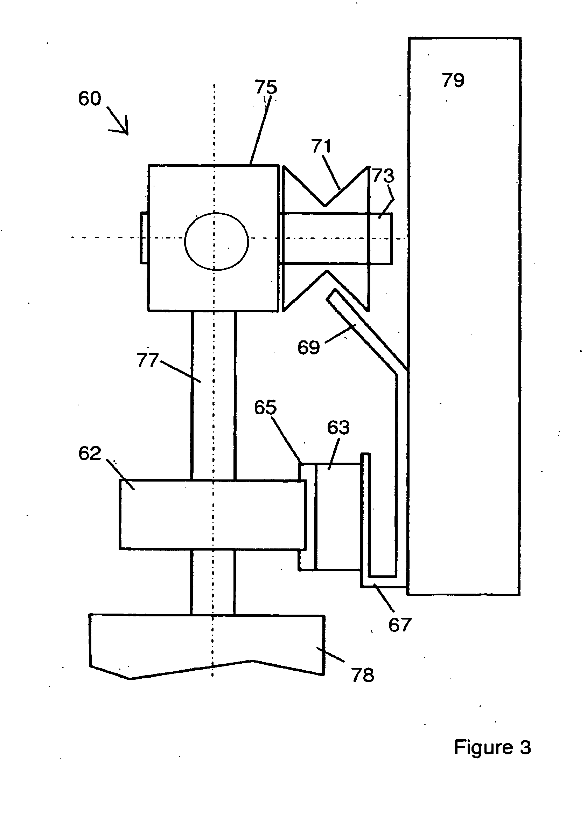

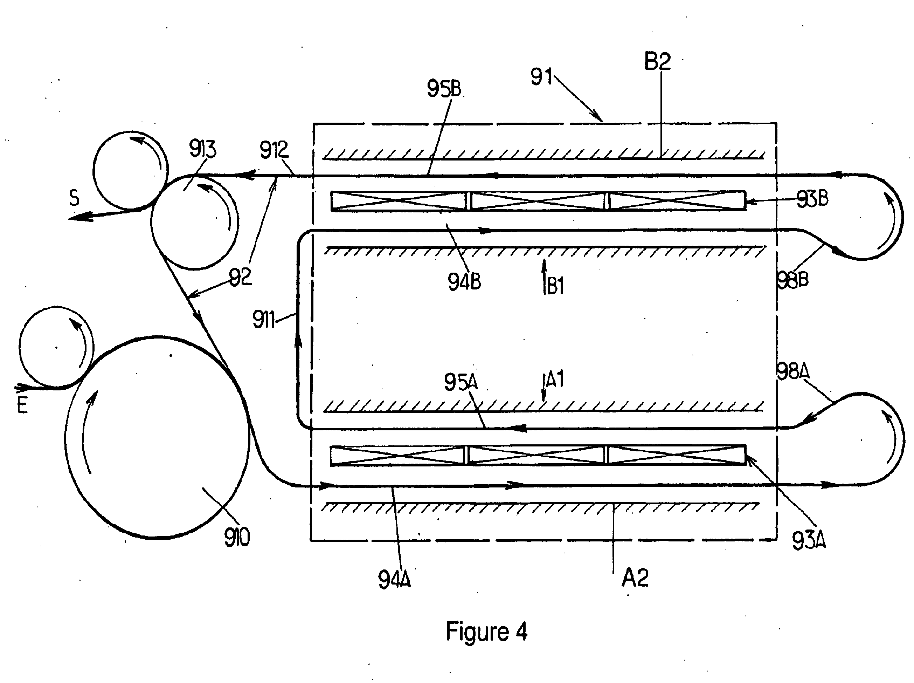

À la figure 3, on a représenté un mode particulier de réalisation d'une chaîne de transfert adaptée à un dispositif de chauffage 91 (figure 4) selon l'invention. On a représenté que partiellement ladite chaîne de transfert de façon à se limiter aux seuls éléments nouveaux apportés par l'invention.

Sur un support 79, composé sous la forme d'une plaque dirigée sensiblement verticalement, est fixé une platine 67,69.

Dans un mode particulier de réalisation, la platine permet de supporter la charge d'un moyen de translation 71,73 des moyens successifs de support de préformes comme un moyen de support de préformes 60.

Particulièrement, la partie supérieure 69 de la platine sert de rail de roulement à une roue 71. La roue 71 présente un profil auto centrant visible au dessin et est montée sur un arbre 73 solidaire d'un élément ou corps 75 qui a déjà été décrit pour une chaîne articulée comme la chaîne 14 dans l'état de la technique représentée à la figure 1.

L'élément 75 porte ensuite, libre en rotation grâce à un palier non représenté, un arbre 77 dont l'axe est confondu avec l'axe de symétrie d'une préforme saisie par une pince de préhension, analogue à la pince 11 du corps 13 du moyen de support 5 de la figure 1.

À la figure 3, le moyen de support 60 de préformes a été représenté avec seulement le haut du corps proprement dit 78 qui est solidaire de l'extrémité de l'arbre 77. L'arbre 77 porte, fixé en rotation, un pignon 62 qui est destiné à venir s'entraîner sur un chemin de roulement 65, 63 monté sur le support 79.

Dans un mode particulier de réalisation, le chemin de roulement, présenté au pignon 62, est formé le long du trajet de circulation des préformes dans le dispositif de chauffage 31 (voir Figure 2), sur une partie 67 de la platine 67, 69 solidaire du support 79.

Dans un mode particulier de réalisation, le chemin de roulement est composé par une courroie crantée qui a été déroulée et fixée sur une partie plate de la partie 67 inférieure de la platine 67,69 en forme de rails.

Dans un mode particulier de réalisation, le pas de crantage de la courroie crantée 63, 65 est adapté au module de denture du pignon 62, et les valeurs de pas de crantage et de module de denture sont déterminées sur la base de la vitesse de défilement prévue sur la chaîne de transfert de manière à permettre une vitesse de rotation adaptée de chacune des préformes montées sur les moyens de support successifs comme le moyen de support 60. Cette vitesse de rotation est calculée de manière à permettre un échauffement uniforme de la masse de la préforme.

Du fait qu'il est possible de réaliser sur une courroie crantée un pas de crantage plus petit que la dimension d'un maillon d'une chaîne comme les chaînes à maillons de l'état de la technique 1, 3 de la figure 1, il est possible d'utiliser des pignons 62 de mise en rotation des moyens de support de préformes d'un diamètre plus petit que celui des pignons semblables 27 ou 29 (figure 1) dans l'état de la technique.

Par ailleurs dans un mode particulier de réalisation, la rigidité du chemin de roulement 63,65 est assurée par le collage de la courroie crantée sur la partie correspondante 67 de la platine 67, 69. Il en résulte qu'il n'est plus nécessaire de réaliser une mise en tension du chemin de roulement qui était offert par les chaînes à maillons 1,3 de l'état de la technique.

Dans un mode préféré de réalisation, la fixation de la courroie crantée, elle-même réalisée sous forme de sections ou tronçons sensiblement rectilignes, est exécutée par le vissage de chacune des sections rectilignes par ses extrémités libres à la platine de support.

Par ailleurs, du fait que le diamètre des pignons de mise en rotation de l'arbre 77 a pu être réduit, il a été possible d'intercaler le pignon 62 entre l'élément 75 de la chaîne articulée et le corps proprement dit du moyen de support de préformes 78. De ce fait, le dispositif de chauffage 31 (Figure 2) sur lequel est monté la chaîne de transfert de l'invention est de hauteur réduite par rapport aux dispositifs de l'état de la technique représentés aux figures 1 et 2.

De plus, du fait qu'il est possible de prévoir une hauteur, représentée dans le sens du dessin de la figure 3, suffisante pour la courroie crantée 65, 63, le réglage relatif des moyens de support de préformes 78 par rapport aux autres éléments fixes comme la chaîne articulée 75 est beaucoup plus simple et permet une tolérance bien supérieure des dimensions.

Enfin, l'association du chemin de roulement 69 et de la partie de fixation 67 du chemin de roulement 63,65 sur une même platine 67,69 élimine le problème du réglage des hauteurs relatives des cames de support de la chaîne articulée 14 relativement aux chaînes à maillons 1 et 3 d'une part et relativement aux enceintes de chauffage du dispositif de chauffage 31 (Figure 2) d'autre part.

A la figure 4 est illustré de façon schématique un autre mode de réalisation d'une chaîne de transfert et d'un dispositif de chauffage 91 incorporant l'invention. En pratique l'agencement illustré à la figure 4 consiste à doubler (parties A1 et B1) la disposition représentée à la figure 2, les préformes ou ébauches effectuant alors quatre traversées successives du dispositif de chauffage 91 - et donc quatre chauffages successifs - entrecoupées de périodes de stabilisation thermique.

Les ébauches arrivant en E sont délivrées par des moyens de chargement 910 (tels qu'une roue de vêtissage) aux moyens de transport 92 constitués sous forme d'une chaîne 92, en boucle fermée, de dispositifs de support. La chaîne 92 pénètre alors dans la partie A1, A2 sur le schéma du four 91 par sa branche 94A où les ébauches subissent un premier chauffage, puis, après passage sur le tronçon 98A en boucle, un second chauffage sur la branche 95A.

Les ébauches passent alors sur un tronçon 911, de raccordement, qui définit également une zone de stabilisation thermique, les amenant à la seconde partie B1 du four dans laquelle elles suivent un parcours analogue : branche 94B avec chauffage, tronçon 98B en boucle avec stabilisation thermique, branche 95B avec chauffage.

A la sortie de la branche 95B, un tronçon 912 amène les ébauches à des moyens de déchargement 913 (tels qu'une roue de "dévêtissage") où elles sont détachées des dispositifs de support de la chaîne 92 (laquelle retourne vers les moyens de chargement 910) et sont évacuées en S vers, par exemple, une unité de soufflage ou d'étirage-soufflage.

Du fait que les moyens de déchargement 913 ne sont pas accolés immédiatement à la sortie du four, le tronçon 912 constitue, lui aussi, une zone de stabilisation thermique achevant la diffusion de la chaleur au sein du matériau thermoplastique.

Les quatre branches 94A, 95A, 94B, 95B peuvent être mutuellement parallèles, de sorte qu'il est possible de constituer un dispositif d'agencement simple et compact, avec une moindre déperdition de chaleur.

En outre, on peut disposer en partie centrale, entre les susdites parties A1 et B1 du dispositif de chauffage 91, des organes communs au fonctionnement de ces deux parties A1 et B1, et notamment la disposition de la platine qui est destinée à recevoir ici quatre sections de courroie crantée rectiligne le long des réflecteurs des éléments de chauffage, à savoir de bas en haut :
- la section de courroie crantée associée à l'élément réflecteur A2 pour assurer la mise en rotation des préformes dans la section de chauffage 94A ;
- la section de courroie crantée associée à l'élément réflecteur A1 pour assurer la mise en rotation des préformes dans la section de chauffage 95A ;
- la section de courroie crantée associée à l'élément réflecteur B1 pour assurer la mise en rotation des préformes dans la section de chauffage 94B ; et
- la section de courroie crantée associée à l'élément réflecteur B2 pour assurer la mise en rotation des préformes dans la section de chauffage 95B.

## Revendications

1. Chaîne de transfert (92) pour dispositif de chauffage (91) de préformes (9) du genre dans lequel un moyen de support (60) de préformes (9) est monté sur une chaîne articulée (14) avec un moyen qui, pour entraîner en rotation la préforme (9) lors de sa circulation dans le dispositif de chauffage (91), comporte un arbre (77) solidaire d'un élément (75) de la chaîne articulée (14) et porte un pignon (62) astreint à rouler sur un chemin de roulement (63, 65) solidaire d'un support (79) lorsque ladite chaîne articulée (14) est entraînée par un moyen moteur,
**caractérisée en ce que** ledit moyen pour entraîner la préforme (9) en rotation comporte un pignon (62) qui, lorsque ladite chaîne articulée (14) est entraînée par un moyen moteur, est destiné à venir s'entraîner sur le chemin de roulement (63, 65) composé par une courroie crantée (63, 65) qui a été déroulée et fixée sur la partie (67) inférieure d'une platine (67, 69) solidaire d'un support (79) réalisé sous la forme d'une plaque dirigée sensiblement verticalement recevant ladite platine (67, 69) et **en ce que** la platine (67, 69) supporte la charge d'un moyen de translation (71, 73) des moyens successifs de support (5, 7, 60) de préformes (9), la partie supérieure (69) de la platine (67, 69) servant de rail de roulement à une roue (71) qui est montée sur un arbre (73) solidaire d'un corps (17, 75) pour une chaîne articulée (14).

2. Chaîne de transfert selon la revendication 1, **caractérisée en ce que** la partie supérieure (69) de la platine sert de rail de roulement à une roue (71) présentant un profil auto centrant et montée sur un arbre (73) solidaire d'un élément (75) de la chaîne articulée (14).

3. Chaîne de transfert selon la revendication 2, **caractérisée en ce que** ledit élément (75) porte l'arbre (77) dont l'axe est confondu avec l'axe de symétrie d'une préforme (9) saisie par une pince (11) de préhension, l'arbre (77) portant, fixé en rotation, le pignon (62) qui est destiné à venir s'entraîner sur le chemin de roulement (63, 65) monté sur la partie inférieure (67) de fixation de la platine solidaire du support (79),

4. Chaîne de transfert selon l'une quelconque des revendications précédentes, **caractérisée en ce que** le chemin de roulement (63, 65), présenté au pignon (62), est formé le long du trajet de circulation des préformes (9) dans le dispositif de chauffage (91) sur ladite partie inférieure (67) de la platine (67, 69) solidaire du support (79) et est composé par une courroie crantée qui a été déroulée et fixée sur une partie plate de ladite partie (67) inférieure de la platine (67, 69) en forme de rail.

5. Chaîne de transfert selon la revendication 4, **caractérisée en ce que** le pas de crantage de la courroie crantée (63, 65) est adapté au module de denture du pignon (62), et les valeurs de pas de crantage et de module de denture sont déterminées sur la base de la vitesse de défilement prévue sur la chaîne de transfert (92) de manière à permettre une vitesse de rotation adaptée de chacune des préformes (9) montées sur les moyens de support (60) successifs, la vitesse de rotation étant calculée de manière à permettre un échauffement uniforme de la masse de la préforme (9).

6. Chaîne de transfert selon la revendication 5, **caractérisée en ce que** la rigidité du chemin de roulement (63, 65) est assurée par le vissage des extrémités de sections sensiblement rectilignes de la courroie crantée sur la partie plate correspondante de ladite partie inférieure (67) de la platine (67, 69).

7. Chaîne de transfert selon l'une quelconque des revendications précédentes, **caractérisée en ce que** le pignon (62) est intercalé entre l'élément (75) de la chaîne articulée (14) et un corps (78) du moyen de support de préformes (60).

8. Chaîne de transfert selon l'une quelconque des revendications 4 à 7, **caractérisée en ce que** la courroie crantée (65, 63) présente une hauteur simplifiant le réglage relatif des moyens de support (60) de préformes (9) par rapport aux autres éléments fixes comme la chaîne articulée (14).

9. chaîne de transfert selon l'une quelconque des revendications précédentes, **caractérisée en ce qu'**elle est disposée en plusieurs chemins (94A, 98A, 95A, 911, 94B, 98B, 95B, 912) traversant des éléments chauffants (A1, A2, B1, B2) de sorte que chaque pignon (62) des moyens pour entraîner ta préforme (9) en rotation soit engagé à son tour sur un chemin de roulement composé de sections de courroie crantée associés aux éléments réflecteurs desdits éléments chauffants (A1, A2, B1, B2).

10. Machine de soufflage de conteneurs sur la base de préformes réchauffées dans un dispositif de chauffage (91), **caractérisée en ce qu'**il comporte une chaîne de transfert (92) de préformes selon l'une quelconque des revendications précédentes.

## Patentansprüche

1. Transferkette (92) für eine Heizvorrichtung (91) von Vorformen (9) von der Art, bei der eine Trageinrichtung (60) von Vorformen (9) auf eine Gelenkkette (14) montiert ist, mit einer Einrichtung, die zum Drehantrieb der Vorform (9) bei ihrem Umlauf in der Heizvorrichtung (91) eine fest mit einem Element (75) der Gelenkkette (14) verbundene Welle (77) aufweist und ein Zahnrad (62) trägt, das gezwungen ist, auf einer fest mit einem Träger (79) verbundenen Rollbahn (63, 65) zu rollen, wenn die Gelenkkette (14) von einer Antriebseinrichtung angetrieben wird,
**dadurch gekennzeichnet, dass** die Einrichtung für den Drehantrieb der Vorform (9) ein Zahnrad (62) aufweist, das, wenn die Gelenkkette (14) von einer Antriebseinrichtung angetrieben wird, dazu bestimmt ist, auf der Rollbahn (63, 65) angetrieben zu werden, die aus einem Zahnriemen (63, 65) besteht, der abgewickelt und am unteren Teil (67) einer fest mit einem Träger (79) verbundenen Werkplatte (67, 69) befestigt wurde, der in Form einer im Wesentlichen senkrecht ausgerichteten Platte hergestellt ist, die die Werkplatte (67, 69) aufnimmt, und dass die Werkplatte (67, 69) die Last einer Translationseinrichtung (71, 73) der aufeinanderfolgenden Trageinrichtungen (5, 7, 60) von Vorformen (9) trägt, wobei der obere Teil (69) der Werkplatte (67, 69) als Rollschiene für ein Rad (71) dient, das auf eine fest mit einem Körper (17, 75) für eine Gelenkkette (14) verbundene Welle (73) montiert ist.

2. Transferkette nach Anspruch 1, **dadurch gekennzeichnet, dass** der obere Teil (69) der Werkplatte als Rollschiene für ein Rad (71) dient, das ein selbstzentrierendes Profil hat und auf eine fest mit einem Element (75) der Gelenkkette (14) verbundene Welle (73) montiert ist.

3. Transferkette nach Anspruch 2, **dadurch gekennzeichnet, dass** das Element (75) die Welle (77) trägt, deren Achse mit der Symmetrieachse einer Vorform (9) zusammenfällt, die von einer Greifzange (11) ergriffen wird, wobei die Welle (77) das Zahnrad (62) drehfest trägt, das dazu bestimmt ist, auf der Rollbahn (63, 65) angetrieben zu werden, die auf den unteren Befestigungsteil (67) der fest mit dem Träger (79) verbundenen Werkplatte montiert ist.

4. Transferkette nach einem der vorhergehenden Ansprüche, **dadurch gekennzeichnet, dass** die dem Zahnrad (62) angebotene Rollbahn (63, 65) entlang der Umlaufstrecke der Vorformen (9) in der Heizvorrichtung (91) auf dem unteren Teil (67) der fest mit dem Träger (79) verbundenen Werkplatte (67, 69) geformt ist und aus einem Zahnriemen besteht, der abgewickelt und an einem flachen Teil des unteren Teils (67) der Werkplatte (67, 69) in Form einer Schiene befestigt wurde.

5. Transferkette nach Anspruch 4, **dadurch gekennzeichnet, dass** die Zahnteilung des Zahnriemens (63, 65) an das Zahnungsmodul des Zahnrads (62) angepasst ist, und die Werte der Zahnteilung und des Zahnungsmoduls auf der Basis der vorgesehenen Vorbeilaufgeschwindigkeit auf der Transferkette (92) bestimmt werden, um eine angepasste Drehgeschwindigkeit jeder der auf die aufeinanderfolgenden Trageinrichtungen (60) montierten Vorformen (9) zu erlauben, wobei die Drehgeschwindigkeit so berechnet wird, dass sie eine gleichmäßige Erwärmung der Masse der Vorform (9) erlaubt.

6. Transferkette nach Anspruch 5, **dadurch gekennzeichnet, dass** die Steifheit der Rollbahn (63, 65) durch das Schrauben der Enden von im Wesentlichen geradlinigen Abschnitten des Zahnriemens auf den entsprechenden flachen Teil des unteren Teils (67) der Werkplatte (67, 69) gewährleistet wird.

7. Transferkette nach einem der vorhergehenden Ansprüche, **dadurch gekennzeichnet, dass** das Zahnrad (62) zwischen dem Element (75) der Gelenkkette (14) und einem Körper (78) der Trageinrichtung von Vorformen (60) eingefügt ist.

8. Transferkette nach einem der Ansprüche 4 bis 7, **dadurch gekennzeichnet, dass** der Zahnriemen (65, 63) eine Höhe aufweist, die die relative Einstellung der Trageinrichtungen (60) von Vorformen (9) bezüglich der anderen ortsfesten Elemente wie der Gelenkkette (14) vereinfacht.

9. Transferkette nach einem der vorhergehenden Ansprüche, **dadurch gekennzeichnet, dass** sie auf mehreren die Heizelemente (A1, A2, B1, B2) durchquerenden Bahnen (94A, 98A, 95A, 911, 94B, 98B, 95B, 912) angeordnet ist, so dass jedes Zahnrad (62) der Einrichtungen zum Drehantrieb der Vorform (9) seinerseits in eine Rollbahn eingesetzt wird, die aus Zahnriemenabschnitten besteht, welche den Reflektorelementen der Heizelemente (A1, A2, B1, B2) zugeordnet sind.

10. Maschine zum Blasen von Behältern auf der Basis von in einer Heizvorrichtung (91) aufgeheizten Vorformen, **dadurch gekennzeichnet, dass** sie eine Transferkette (92) von Vorformen nach einem der vorhergehenden Ansprüche aufweist.

## Claims

1. A transfer chain (92) for a preforms (9) heater (91) of the kind in which a support means (60) of the preforms (9) is mounted on an articulated chain (14) with a means for rotating the preform (9), as it travels in the heater (91), comprises a shaft (77) which is fastened to an element (75) of the articulated chain (14) and carries a pinion (62) compelled to roll along a rolling track (63, 65) fastened to a frame (79) when said articulated chain (14) is driven by a motor means,
**characterized in that** said means for rotating the preform (9) comprises a pinion (62) which, when said articulated chain (14) is driven by a motor means, is intended to be driven along the rolling track (63, 65) consisting in a cogged belt (63, 65) which has been unwound and attached to the lower portion (67) of a plate (67, 69) fastened to a support (79) in the form of an approximately vertical panel receiving said plate (67, 69) and **in that** the plate (67, 69) supports the load of a means (71, 73) for translating the successive support means (5, 7, 60) of the preforms (9), the upper portion (69) of the plate (67, 69) being a rolling track for one wheel (71) which is mounted on a shaft (73) fastened to a body (17, 75) for an articulated chain (14).

2. The transfer chain as claimed in claim 1, **characterized in that** the upper portion (69) of the support plate serves as a rolling track for a wheel (71) having a self-centering profile and mounted on a shaft (73) fastened to a body (75) for an articulated chain (14).

3. The transfer chain as claimed in claim 2, **characterized in that** the body (75) carries the shaft (77), the axis of which is coincident with the axis of symmetry of a preform (9) gripped by a gripper (11), the shaft (77) carrying, fixed so as to rotate, the pinion (62) which is intended to be driven along the rolling track (63, 65) mounted on the lower fixing portion (67) of the plate fastened to the support (79).

4. The transfer chain as claimed in anyone of the preceding claims, **characterized in that** the rolling track (63, 65), presented to the pinion (62), is formed along the travel path of the preforms (9) in the heater (91), on said lower portion (67) of the support plate (67, 69) fastened to the support (79) and is made up of a cogged belt which has been unwound and attached to a flat portion of said lower portion (67) of the rail-shaped plate (67, 69).

5. The transfer chain as claimed in claim 4, **characterized in that** the cog pitch of the rolling track (63, 65) is adapted to the toothing modulus of the pinion (62), and the cog pitch and toothing modulus values are determined on the basis of the intended run speed on the transfer chain (92) so as to give each of the preforms (9) mounted on successive support means (60) a suitable rotation speed, the rotation speed being calculated so as to allow the mass of the preform (9) to be uniformly heated.

6. The transfer chain as claimed in claim 5, **characterized in that** the stiffness of the rolling track (63, 65) is provided by screwing the ends of approximately straight sections of the cogged belt onto the corresponding flat portion of said lower portion (67) of the plate (67, 69).

7. The transfer chain as claimed in anyone of the preceding claims, **characterized in that** the pinion (62) is interposed between the body (75) of the articulated chain (14) and a body (78) of the support means (60) of preforms (9).

8. The transfer chain as claimed in any of claims 4 to 7, **characterized in that** the cogged belt (65, 63) has a height that simplifies the relative adjustment of the support means (60) of the preforms (9) with respect to the other stationary elements such as the articulated chain (14).

9. The transfer chain as claimed in any one of the preceding claims, **characterized in that** it is positioned on several paths (94A, 98A, 95A, 911, 94B, 98B, 95B, 912) passing through the heating elements (A1; A2, B1, B2) so that each pinion (62) of the means for rotating the preform (9) is in turn engaged on a rolling track consisting of sections of cogged belts associated with the reflectors elements of said heating elements (A1, A2, B1, B2).

10. A machine for blow-molding containers based on preforms heated in a heater (91), **characterized in that** it includes a preform transfer chain (92) as claimed in anyone of the preceding claims.
